# EUROPEAN PATENT APPLICATION

(11) **EP 1 852 954 A2**
(43) Date of publication of application: **07.11.2007**
(21) Application number: 07107332.4
(22) Date of filing: 02.05.2007
(51) Int. Cl.: H02J 7/00

(54) **Control circuit for battery charger**

(30) Priority: 05.05.2006 SE 0601038
(71) Applicant: Swede Electronics, 780 53 Nås (SE); Olsson, Lars, 780 53 Nås (SE)
(72) Inventor: Olsson, Lars, 780 53 Nås (SE); Svedlund, Hans, 793 32 Leksand (SE)
(74) Representative: Stenborg, Anders Vilhelm

(57) **Abstract**

The present invention relates to a control system (11; 21; 31) for use when charging a battery (6; 28; 38) from a battery charger (2; 25; 35) through two charging cables (4). The control system (11; 21; 31) comprises a measuring unit (13; 23; 33) that is connected over the battery terminals (5; 27; 37) when charging , and comprises a means (18) to sense the voltage over the battery terminals (5; 27; 37), and an outlet (ST₁; 23_{data}) to output control data from the measuring unit. The control system (11; 21; 31) further comprises a control unit (12; 22; 32) arranged to adapt the charging power that is fed to the battery (6; 28; 38) from the battery charger (2; 25; 35) in response to the control data received from the measuring unit (13; 23; 33), wherein the control data is at least based on the sensed voltage (U_{batt}) over the battery terminals (5; 27; 37).

## Description

### Technical field

The present invention relates to a control system for battery charger that when charging a battery may adapt the charging curve dependent on the characteristics of the battery. The invention also relates to a method for charging a battery.

### Background to the invention

A battery charger has very precisely controlled characteristics, such as charging current and charging voltage, at their outlets. Each battery charger is normally adapted to a specific type of battery and it is very important that the correct charger is used with a correct battery when the battery charger is connected to a battery to be charged. The battery may be damaged when exposed to a too high charging current or charging voltage, and the capacity of the battery is not used when exposed to a too low charging current or charging voltage which results in battery degeneration, especially for lead-acid batteries.

Battery chargers are normally delivered with charging cables that should be connected to the battery terminals. The length and dimension of the charging cables, and the connections, affects the magnitude of the voltage drop over the charging cables and thus, how much of the charging voltage from the charger outlets that actually is applied over the battery terminals when charging. Thus, the charging voltage between the battery terminals depends on how the battery charger is connected. Voltage losses may occur that results in a non-optimized charging of the battery.

In portable computers, it is very important for a user, and for certain computer programs, to know the status of the battery during discharge and charging. US 6, 856,922, assigned to Analog Devices Inc., describes such a system. The battery temperature and voltage is measured at the battery cells and the charge/discharge current is measured at the charger. Collected data concerning temperature and voltage are transformed to a digital signal and transferred through a line to the charger wherein a program calculates the status of the battery.

Ordinary rechargeable batteries do not have any built-in units that facilitate measuring of voltage or temperature at the battery terminals when charging, or discharging if desired. Such batteries would be more expensive to manufacture and it is normally more interesting for a user of rechargeable batteries to secure an optimal charging of the batteries than to know the status of the batteries.

Thus, there exists a need to develop a system that facilitates more efficient charging of batteries without making the batteries more expensive.

### Summary of the invention

An object with the present invention is to provide a control system for a battery charger that makes it possible to adapt the charging curve at every charging occasion to achieve a better charging of a battery compared to prior art techniques.

The object is achieved by providing a control system for a battery charger as defined in claim 1, wherein a measuring unit senses the battery voltage at the battery and feedback the information to a control unit at the battery charger when charging the battery.

An advantage with the present invention is that a more effective charging of a battery may be achieved irrespectively how it is connected to a battery charger.

Further objects and advantages will be apparent for a skilled person in the art from the following detailed description of preferred embodiments.

### Brief description of the drawings

Fig. 1 shows a battery charging system according to prior art.
Fig. 2 shows a battery charging system with a first embodiment of a control system according to the invention.
Fig. 3 shows a battery charging system with a second embodiment of a control system according to the invention.
Fig. 4 shows a battery charging system with a third embodiment of a control system according to the invention.
Fig. 5 shows a battery charging system with a fourth embodiment of a control system according to the invention.
Fig. 6 shows a battery charging system with a fifth embodiment of a control system according to the invention.

### Detailed description of preferred embodiments

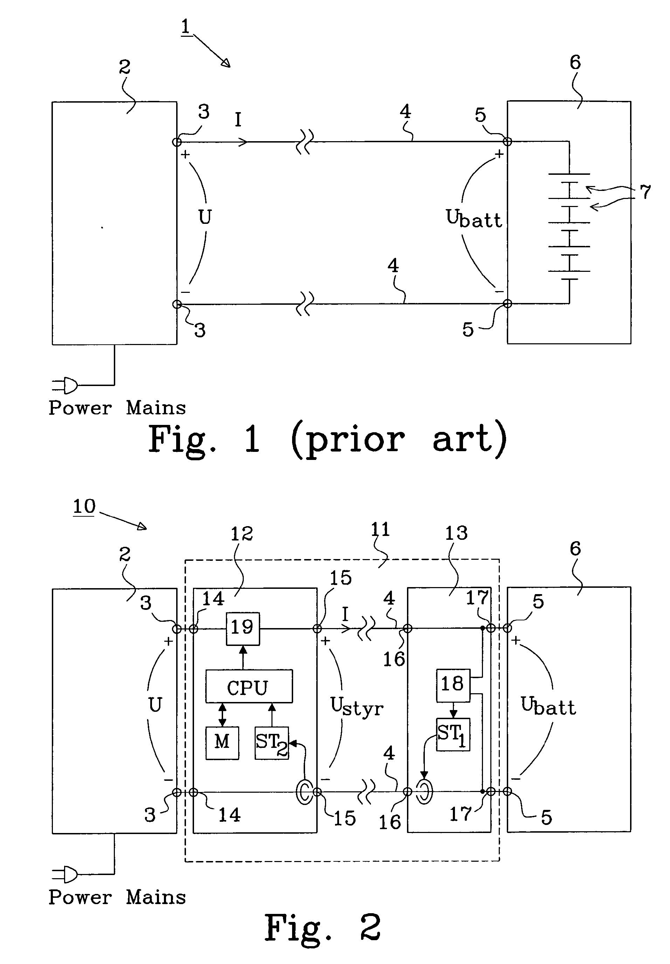

Figure 1 shows a battery charging system 1 according to prior art. A battery charger 2 is connected to power mains and is normally constructed in such a way that it provide a certain current I and a certain voltage U on its outlets 3. Charging cables 4 are at a first end connected to outlets 3 on the battery charger 2 and at a second end connected to terminals 5 on the battery 6. The battery consists of one or a number of cells 7, which are charged by the applied current I and voltage U.

The length and dimension of the charging cables may vary, and the connections to the battery chargers outlets 3 and the battery terminals 5, respectively, may be connected in such a way that a voltage loss occurs over the charging cables 4 and the battery 6 experience in that case that a lower voltage U_{batt} is fed from the battery charger 2. This lead to a non-optimal charging of the battery 6 and this might result in a not desired reduction of battery performance.

The inventive concept is based on the knowledge that there exists an optimal charging curve for each battery, or at least each type of battery. The loss that might arise when connecting charging cables between a battery charger and a battery is possible to measure and thus also adapt the fed power to the battery that compensate for this loss.

Figure 2 shows a battery charging system 10 with a first embodiment of a control system 11 that comprises a control unit 12 and a measureing unit 13. The control unit 12 has two inlets 14 and two outlets 15, wherein the outlets 3 of the battery charger is connected to the inlets 14 of the control unit, and that the outlets 15 of the control unit in turn are connected to the first end of the charging cables 4. The measuring unit 13 also consists of two inlets 16 and two outlets 17, wherein the battery terminals 5 are connected to the outlets 17 of the measuring unit and the inlets 16 of the measuring unit are connected to the second end of the charging cables 4. The distance between the control unit 12 and the measuring unit 13 are arbitrary, but it is essential that the measuring unit is arranged as close as possible to the battery terminals 5 since the purpose of the measuring unit is to measure the voltage U_{batt} between the battery terminals 5. This is performed by a measuring circuit 18 that is connected to the battery terminals 5 through the outlets 17 of the measuring unit. The value of the measured voltage is in this embodiment converted to digital control data and transferred to a first signal transformer ST₁ that generates a signal which in this embodiment is superposed on, and fed via, the negative charging cable 4 to the control unit 12.

The superposed signal is captured in the control unit 12 by a second signal transformer ST₂ that converts the signal to digital control data and transfers it thereafter to a processor CPU. A memory M is in this embodiment also connected to the CPU wherein it is possible to store control data from earlier measuring occasions. A calculation of the voltage U_{styr} which is to be fed between the outlets 15 of the battery charger is performed in the CPU to contribute to an optimal charging of the battery 6. A control circuit 19, connected between the inlet 14 and outlet 15 of the control unit regulates and adapts the voltage on the positive charging cable 4 so that the desired charging voltage U_{styr} between the outlets 15 of the control unit is obtained. The current I is in this embodiment constant and when the charging voltage U_{styr} changes, this results in a change of the charging power that is fed to the battery.

The control system in figure 2 is especially adapted to be used in existing battery charging systems such as the system described in connection with figure 1. The measuring unit 13 may easily be built into the connectors for the battery terminals 5 and the control unit 12 may be attached to a normal battery charger 2. If the control system should be able to be used on different battery types, i.e. with different operating voltage and of different type (NiMH batteries, lead-acid batteries, etc.), the control system have to be informed about this before charging commences. This may for instance be achieved by providing the control system with a possibility to manually specify the battery operating voltage and type, or by providing the battery with an identity that automatically is transferred to the system when connecting the battery. In order to be able to achieve an automatic identification of the type and operating voltage of the battery, it is preferred that a two-way exchange of information between the control unit 12 and the measuring unit 13 may be performed. This two-way exchange of information may, for example, mean that a battery charger when connected to a battery transmits a signal through the control system to the measuring unit to request information regarding battery operating voltage, type, and possibly which type of charging algorithm that should be used. Another example of information that may be transferred from the control unit to the measuring unit is an indication that the charging of the battery is completed, whereby an indication on the measuring unit (or the battery) makes the user aware of this fact.

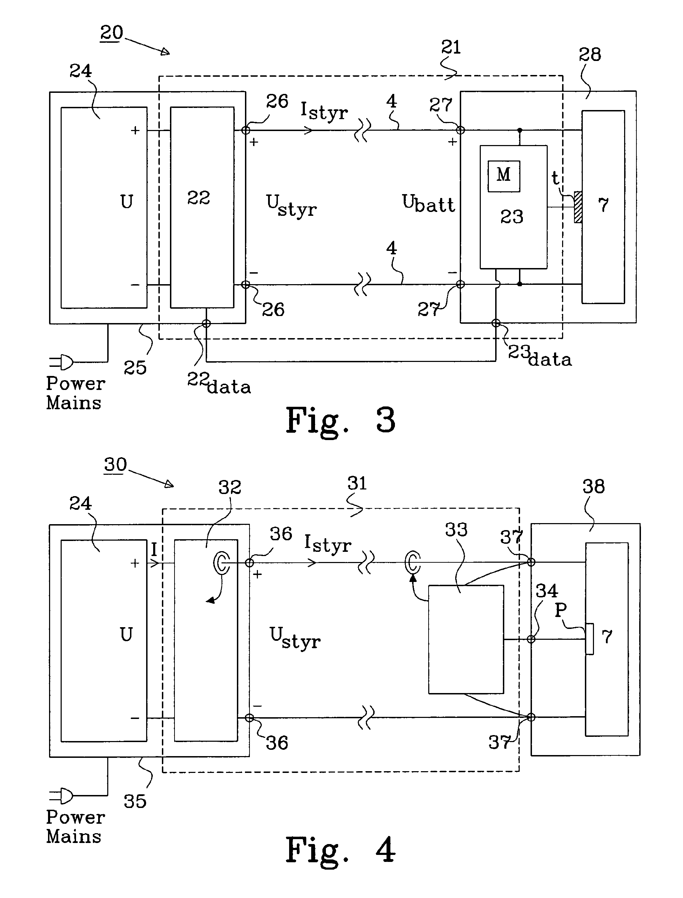

Figure 3 shows a battery charging system 20 with a second embodiment of a control system 21 that comprises a control unit 22 and a measuring unit 23.

The control unit 22 is together with a charging unit 24 built into a battery charger 25. The charger unit 24 feeds current I and voltage U to the control unit 22, which in turn feeds current I_{styr} and charging voltage U_{styr} on the outlets 26 of the battery charger. A first end of charging cables 4 are connected to the outlets 26 of the battery charger, and a second end are connected to terminals 27 of a battery 28. The measuring unit 23 is built into the battery 28 together with one or more battery cells 7, wherein the measuring unit 23 and the battery cells 7 are parallel connected to the terminals 27. A temperature sensor t is arranged close to the battery cells 7 and is connected to the measuring unit 23. A memory M is integrated with the measuring unit 23, whereby measured control data in the form of battery voltage U_{batt} between the terminals 27 and measured temperature at the battery cells 7 may be stored. The battery temperature affects the voltage that should be used to obtain an optimum charging of the battery 28. Several temperature sensors may naturally be arranged around the battery 28.

The measuring unit 23 has a data port 23_{data} and the control unit 22 has a data port 22_{data} through which information is transferred between the measuring unit 23 and the control unit 22 via a separate data line 29. Primarily, control data from the measuring unit 23 is transferred to the control unit 22 in order to adapt the charging voltage U_{styr} or the charging current I_{styr} to achieve an optimal charging of the battery 28. On the other hand, some processing of the control data may be done in the control unit 22, wherein the result of the processing advantageously is stored in the battery memory for future use. The memory may also comprise an identification of the battery that could be used to automatically select an algorithm to obtain an optimal charging progress at the outlets 26 of the battery charger, i.e. adapted output power, such as charging voltage and/or charging current, as a function of time.

Control data that is transferred between the measuring unit and the control unit may be either digital or analogue dependent on the choice of transfer channel. The requirement on the transfer channel is that it shall be free of losses, or at least be conditioned in such a way that losses are known in advance. A number of examples of transferring analogue signals that are applicable are: luminous intensity in a fiber, sound signal intensity or pitch, current level.

An advantage with storing control data and identification information in the memory M of the battery is that the battery charger may be connected without a manual identification and setting of the control unit has to be performed, which reduces the risk for manual error. The processing of the control data is preferable performed in the control unit 22, since batteries are consumer goods and the cost to manufacture batteries should be kept at the lowest possible level. The processing of control data is normally performed only when charging and it is therefore logical that the processing capability is placed outside the battery 28.

Figure 4 shows a battery charging system 30 with a third embodiment of a control system 31 comprising a control unit 32 and a measuring unit 33. The control unit 32 is together with a charging unit 24 built into a battery charger 35. The charger unit 24 feeds current I and voltage U to the control unit 32, which in turn feeds current I_{styr} and charging voltage U_{styr} on the outlets 36 of the battery charger. A first end of charging cables 4 are connected to the outlets 36 of the battery charger, and a second end are connected to terminals 37 of a battery 38. The battery 28 consists of one or more battery cells 7and a pressure sensor P, which is arranged to measure the pressure inside each battery cell 7. In the case that a common pressure chamber is used for all cells 7, only one pressure sensor P is needed, in other cases one is needed for each battery cell. The pressure sensor is connected to an outlet 34 on the battery 38 to which the measuring unit 33 is connected. The measuring unit is in this embodiment a separate unit that also is connected in parallel over the battery terminals 37 to be able to measure the voltage U_{batt} between the battery terminals. The measuring unit is also provided with a means (not shown) that facilitates pressure measurement via the pressure sensor P, and that the measuring unit is provided with a possibility to convert control data to a superposed data signal (as was described in connection with figure 2). In this embodiment, the signal is superposed on the positive charging cable 4 and is captured by the control unit 32 as previously described. The pressure changes in, for instance a NiMH battery, is a very rapid way to monitor that the charging process occur in a controlled and efficient way. The control unit 32 functions exactly in the same way as the control unit described in connection with figure 3, except that control data is transferred in another way. A possible memory M may be placed either in the measuring unit 33 or in the control unit 32. It is preferred that it is placed in close connection with a processor (if one is needed to perform calculations).

The measurement of voltage U_{batt} between the battery terminals may be performed continuously, or at regular intervals, and generates control data to the control unit wherein an adaptation of output charging power, preferably by changing charging voltage U_{styr} and/or charging current I_{styr}, is performed to optimize charging of the battery.

Furthermore, it is possible to store different charging algorithms in the memory M, i.e. charging curves and charging profiles, which may be used to further optimize charging of a battery in dependence of transferred control data from the measuring unit. If there exists a possibility to identify the batteries at the charging occasions, earlier charging progresses may be stored and from these a diagnosis may be obtained regarding the battery condition, and consequently it is possible to determine in advance if a battery should be replaced before it stops functioning properly. Some batteries may be reconditioned by using a specific charging curve and thus improve its performance and consequently prolong its length of life.

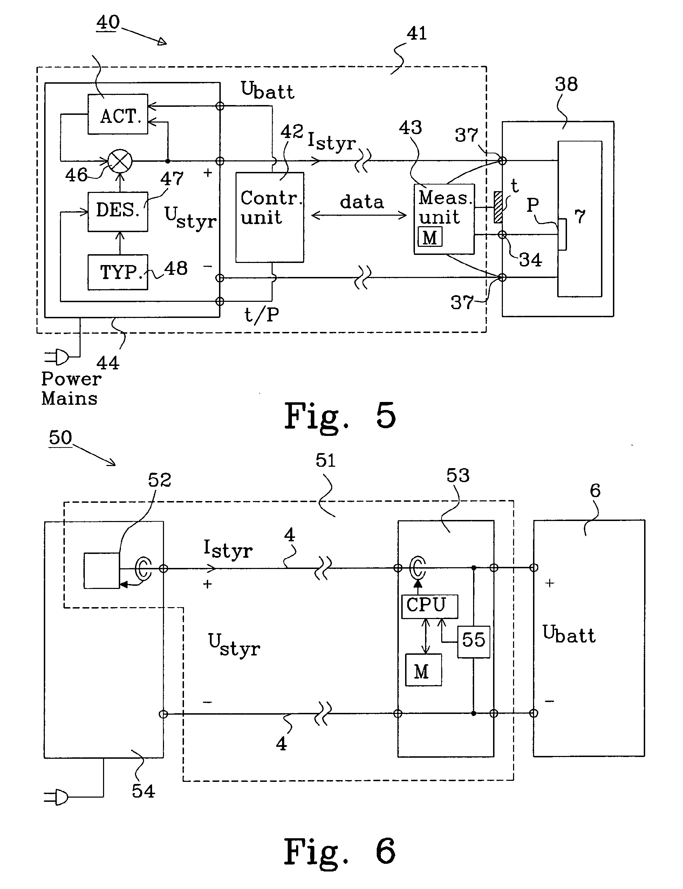

Figure 5 shows a battery charging system 40 with a fourth embodiment of a control system 41 comprising a control unit 42 and a measuring unit 43. The measuring unit is connected to a battery 38, as described earlier in connection with figure 4, except that in addition to a pressure sensor P that is connected to the measuring unit an external temperature sensor t has also been connected. The measuring unit, which could be provided with a memory, measures the battery voltage U_{batt}, and registers the inner pressure of the battery cells and also the outer temperature of the battery. These are converted to control data that are transferred either digital or analogue to the control unit 42 in a controlled manner according to any of the described ways above. The communication may be two-ways as indicated by the arrow. The control unit 42 is connected to a battery charger 44 that comprises certain functionality to adapt the outputted power to the battery 38. In a first unit 45 an actual (ACT.) value is calculated based on the measured battery voltage U_{batt} and the output power from the charger, i.e. I_{styr} and U_{styr}. The actual value, which may be a combination of charging current and charging voltage, is adjusted in a multiplier 46 in dependence of a desired (DES.) value that is calculated in a second unit 47 based on the measured values of temperature and pressure of the battery 38 and typical (TYP.) values that are stored in a memory 48 in the charger.

Figure 6 shows a battery charging system 50 with a fifth embodiment of a control system 51 that comprises a control unit 52 and a measuring unit 53. In this embodiment all parts have been placed in the measuring unit 53 except the measurement of output current I_{styr} and the ability to change output power, which are arranged in the battery charger 54 in which the control unit 52 is placed. The battery voltage U_{batt} is measured in a measuring circuit 55 in the measuring unit 53 (temperature and pressure are possibly measured if such sensors are used). Charging algorithms are inter alia stored in a memory M for this type of battery and a processor CPU uses control data from the measuring circuit and information regarding the charging progress to determine a desired value of the output power from the battery charger. This information is transferred to the control unit 52 and the charging current I_{styr} and/or the charging voltage U_{styr} are changed to optimize the charging progress of the battery.

The embodiment described in connection with figure 6 is more suitable for mobile applications, e.g. wheelchairs, electric vehicles, etc. in which battery 6 and measuring unit 53 together with charging cables are built into the application and wherein only the charging cables need to be connected to a battery charger provided with a possibility to capture control data and adapt the out power accordingly. Alternatively, the complete control system 51 may be implemented in the application and only an unintelligent battery charger may be connected when needed.

In short, the method describing the process that the control systems above perform comprises the following steps:
- sense the voltage U_{batt} over the battery terminals,
- convert the sensed voltage U_{batt} to control data,
- transfer the control data to the control unit,
- adapt the charging power that is fed to the battery from the battery charger based on transferred control data to optimize the voltage U_{batt} at the battery terminals when charging the battery.

The scope of the invention should not be limited to the specific embodiments in figures 2-6, on the contrary a skilled person in the art realize that many combinations of them are possible without deviating from the spirit of the invention.

The transfer of control data that has been described in connection with figures 2, 4 and 6, i.e. attaching a signal transformer to the charging cables is a well recognized way of using an existing cable for superposed signaling purposes. This is for instance described in an article with the title: "Communication over power lines" by Murray Gunn published 2000 in IEEE.

## Claims

1. A control system (11; 21; 31; 41; 51) for use when charging a battery (6; 28; 38) from a battery charger (2; 25; 35; 44; 54) through two charging cables (4), said control system (11; 21; 31; 41; 51) comprising:
- a measuring unit (13; 23; 33; 43; 53) that is connected over, and arranged in close vicinity to, the battery terminals (5; 27; 37) when charging, said measuring unit comprises:
- a means (18) to sense the voltage over the battery terminals (5; 27; 37), and
- an outlet (ST₁; 23_{data}) to output control data from the measuring unit,
**characterized in that** the control system (11; 21; 31; 41; 51) further comprises:
- a control unit (12; 22; 32; 42; 52) arranged at an arbitrary distance from the measuring unit (13; 23; 33; 43; 53), said control unit adapts the charging power that is fed to the battery (6; 28; 38) from the battery charger (2; 25; 35; 44; 54) in response to the received control data from the measuring unit (13; 23; 33; 43; 53) through a transfer channel with known losses, that at least is based on the sensed voltage (U_{batt}) over the battery terminals (5; 27; 37).

2. The control system according to claim 1, **characterized in that** the control unit (22; 52) is integrated with the battery charger (25; 54).

3. The control system according to any of claims 1 or 2, said control system (21; 41) comprises at least one temperature sensor (t) connected to the measuring unit (23; 43), said at least one temperature sensor (t) is arranged in close vicinity of the battery cells (7) and said measuring unit (23; 43) comprises a temperature sensing means to sense the battery temperature through said at least one temperature sensor (t),
**characterized in that** control data received from the measuring unit (23; 43) also is based on the sensed temperature of the battery (28; 38).

4. The control system according to any of claims 1-3, **characterized in that** the control system (31; 41) comprises at least one pressure sensor (P) connected to the measuring unit (33; 43), said at least one pressure sensor (P) is arranged in such a way that a pressure sensing means in the measuring unit (33; 43) sense the inner pressure of the battery cells (7), wherein control data received from the measuring unit (33; 43) also is based on the sensed inner pressure of the battery (38).

5. The control system according to any of claims 1-4,
**characterized in that** the control system is provided with a memory (M) in which earlier outputted control data from the measuring unit (13; 23; 43; 53) is stored and reused to adapt the charging power that is fed to the battery (6; 28; 38).

6. The control system according to claim 5, **characterized in that** different predetermined charging curves are stored in the memory (M) and that the control system further comprises a processor (CPU) that in response to stored control data and the different predetermined charging curves in the memory (M) adapts the charging power that is fed to the battery.

7. The control system according to any of claims 5 or 6,
**characterized in that** the memory (M) is included as a part of the measuring unit (23).

8. The control system according to any of claims 5 or 6,
**characterized in that** the memory (M) is included as a part of the control unit (12).

9. The control system according to any of the preceding claims,
**characterized in that** the transfer channel is free of loss.

10. The control system according to claim 9, **characterized in that** control data from the outlet (ST1) of the measuring unit is transmitted to the control unit (12) as a superposed data signal on one of the charging cables (4).

11. The control system according to any of the preceding claims,
**characterized in that** the charging voltage (U_{styr}) and/or the charging current (I_{styr}) from the battery charger is varied to adapt the charging power that is fed to the battery.

12. A method for charging a battery (6; 28; 38) from a battery charger (2; 25; 44; 54) using a control system (11; 21; 31; 41; 51) comprising a control unit (12; 22; 32; 42; 52) and a measuring unit (13; 23; 33; 43; 53) according to any of claims 1-10, **characterized by** that the method comprises the following steps:
a) sensing the voltage (U_{batt}) with the measuring unit (13; 23; 33; 43; 53) which is connected over, and arranged in close vicinity to, the battery terminals (5; 27; 37),
b) converting the sensed voltage (U_{batt}) to control data,
c) transferring the control data to the control unit (12; 22; 32; 42; 52), which is arranged at an arbitrary distance from the measuring unit (13; 23; 33; 43; 53), through a transfer channel with known losses,
d) adapting the charging power that is fed to the battery (6; 28; 38) from the battery charger (2; 25; 44; 54) in response to the transferred control data to optimize the voltage (U_{batt}) at the battery terminals (5; 27; 37) when charging the battery (6; 28; 38).
